# EUROPÄISCHE PATENTSCHRIFT

(11) **EP 1 457 165 B1**
(45) Veröffentlichungstag und Bekanntmachung des Hinweises auf die Patenterteilung: **08.06.2011**
(21) Anmeldenummer: 04090046.6
(22) Anmeldetag: 12.02.2004
(51) Int. Cl.: A61C 8/00

(54) **Dentalimplantat**
Dental implant
Implant dentaire

(30) Priorität: 12.03.2003 DE 20304367 U
(43) Veröffentlichungstag der Anmeldung: 15.09.2004
(73) Patentinhaber: Dr. Ihde Dental AG, 8738 Uetliburg (CH)
(72) Erfinder: Ihde, Stefan, 8738 Uetliburg (CH)
(74) Vertreter: Neumann, Günter

(56) Entgegenhaltungen:
- WO-A-02/07633
- US-A- 4 050 157
- US-A- 4 344 757
- US-A1- 2001 038 996

## Beschreibung

Die Erfindung bezieht sich auf ein Dentalimplantat gemäß dem Oberbegriff des Anspruchs 1, das durch Basalosseointegration von der Seite her in einen, auf chirurgischem Weg hergestellten Osteotomieschlitz in den Kieferknochen eingesetzt wird und zur Aufnahme und Befestigung prothetischer Teile, wie beispielsweise einer Krone, einer Brücke oder eines Stegs dient.

Neben den ein- und zweiteilig ausgebildeten basalen Dentalimplantaten, die mindestens eine Basisscheibe und einen Gewindeträger aufweisen, der mit der Basisscheibe fest verbunden ist und ein kopfseitiges Außengewinde oder ein Abutment zur Aufnahme und Befestigung der prothetischen Teile besitzt - FR 2 302 715, US 3 925 892, US 4 344 757, US 2001/038996 A1 wurden bereits Implantate vorgeschlagen, die mit zwei Basisscheiben ausgestattet sind - EP 0 935 949 A1; DE 289 20 487 U1. Beide Scheibenkörper sind unter einem festgelegten Abstand voneinander getrennt und an einem orthogonalen Schaft, der in der Regel eine Verlängerung des Gewindeträgers ist, fest angeordnet.

Derartige Doppelscheibenimplantate ermöglichen eine weitgehende Anpassung des Implantates an die jeweilige Anatomie des Kieferknochens und sind ferner in der Lage, auch bei einer spröden Knochensubstanz höhere Kräfte aufzunehmen und sicher zu übertragen. An sich können diese Implantate auch bei nur noch geringster Knochensubstanz eingesetzt werden und dort erfolgreich funktionieren.

Trotz dieser Vorteile haben diese Doppelscheibenimplantate aber den Nachteil, dass in jedem Fall zwei durchgehende Osteotomieschlitze zur Aufnahme der Basisscheiben im Kieferknochen durchgefräst werden müssen. Hierdurch wird die vorhandene Knochensubstanz zusätzlich geschwächt und die intraossäre Blutversorgung durch das zusätzliche Fremdmaterial im Knochen unterbrochen.

Der Erfindung liegt daher die Aufgabe zugrunde, ein weiter verbessertes Dentalimplantat zu schaffen, das mit zusätzlichen Mitteln zur Vergrößerung von Kraftübertragungs- und Abstützflächen zur Aufnahme und Übertragung von Kräften in den Kieferknochen ausgestattet ist.

Erfindungsgemäß wird diese Aufgabe durch ein Dentalimplantat nach den Merkmalen von Anspruch 1 gelöst. Vorteilhafte Weiterbildungen ergeben sich aus den Unteransprüchen 2 bis 13.

Während bei den bisher bekannten basalen Dentalimplantaten die Kraftübertragungsflächen überwiegend durch den Ringkörper der Basisscheibe gebildet werden, der mit dem Gewindeträger über Stege verbunden ist, sind nach der Erfindung die zusätzlichen Kraftübertragungs- und Abstützflächen, die gleichzeitig eine Sicherungsfunktion des inserierten Implantates gegen Rotation übernehmen und vorzugsweise als Scheibenteile ausgebildet sind, fest mit dem Ringkörper der Basisscheibe verbunden oder lösbar an diesem angebracht.

In einer ersten Grundform besteht die zusätzlichen Kraftübertragungs- und Abstützfläche aus einer, mit der Basisscheibe einstückig ausgebildeten Teilscheibe, die vom Kieferkamm her betrachtet, basal oder crestal zur enossalen Basisscheibe liegen kann und durch die Außenfläche des freien U-Schenkels eines U-förmigen Endabschnittes der Basisscheibe gebildet wird, der an der zur Einschubrichtung gegenüberliegenden Seite der Basisscheibe ausgebogen ist.

Der freie U-Schenkel des ausgebogenen Endabschnittes ist in Einschubrichtung positioniert und erstreckt sich beispielsweise über die gesamte Breite der Basisscheibe. Im Mittelabschnitt des freien U-Schenkels ist eine zentrale Aussparung so eingearbeitet, dass eine Auflage- und Stützfläche entsteht, die beispielsweise parallel zum Ringkörper der Basisscheibe verläuft.

In einer weiteren vorteilhaften Ausbildung des Dentalimplantats können die Basisscheibe und die Teilscheibe, die die zusätzliche Kraftübertragungs- und Abstützfläche bildet, auch in einem Winkel zueinander positioniert sein, wodurch eine zusätzliche Verstärkung der Keilwirkung erzielbar ist. Diese Ausführungsform erfordert jedoch eine zweigeteilte, separate Herstellung des Dentalimplantates und der Teilscheibe und ein geteiltes, stufenweises Einbringen beider Elemente in den Kieferknochen.

Der Abstand zwischen Basisscheibe und Teilscheibe beträgt vorteilhafter Weise mindestens 3 mm. Es zeigt sich jedoch, dass mit der Zunahme des Abstandes auf 4 oder 5 mm eine bessere Osseointegration beider Scheiben in den kompakten Knochen erreicht wird, was mit der ungestörten Ausbildung der sekundären Osteone entlang der spannungsbedingten Trajektorien des Schädelknochens zusammenhängt.

In einer weiteren, bevorzugten Ausbildung der Erfindung sind das Dentalimplantat, mit dem Gewindeträger und der Basisscheibe, und die Teilscheibe für die zusätzliche Kraftübertragungs- und Abstützfläche, zwei gesonderte und voneinander getrennte Bauteile, die individuell hergestellt wurden und durch Montage im Prozess der Insertion des Implantates, vorzugsweise durch eine Formschlussverbindung, zusammengefügt werden. Für die Formschlussverbindung sind am vestibulären Teil des Ringkörpers der Basisscheibe Rastelemente vorgesehen, die clipartig von einem Rastkopf übergriffen werden, der am freien Ende eines Schenkels, der die Basisscheibe des Implantates mit der Teilscheibe verbindet, angeordnet ist.

Die zweiteilige Ausbildung von Dentalimplantat und Teilscheibe hat nicht nur fertigungstechnische Vorteile, sondern bietet auch die Möglichkeit, Dentalimplantate der in Rede stehenden Gattung mit unterschiedlich ausgebildeten Teilscheiben zu kombinieren und auf diese Weise eine noch bessere Anpassung des zu inserierenden Implantates an die dentalen Bedingungen und Erfordernisse vornehmen zu können.

Mit den Dentalimplantaten nach der Erfindung können nicht nur höhere Kräfte aufgenommen und übertragen werden. Sie ermöglichen gleichzeitig eine bessere Verankerung der Implantate am bzw. im Kieferknochen und gewährleisten eine zusätzliche Sicherung des inserierten Implantates gegen Rotation.

Gegenüber den bekannten Doppelscheibenimplantaten hat die vorgeschlagene Lösung den entscheidenden Vorteil, dass keine zwei von lateral nach medial durchgehende Osteotomieschlitze für die Aufnahme von Basisscheiben im Kieferknochen durchgefräst werden müssen. Der Kieferknochen wird dadurch weniger geschwächt und bleibt zumindest an der Gaumenseite, an der ohnehin nur ein geringerer Platz für die Verankerung des Implantates zur Verfügung steht, unverletzt.

Die erfindungsgemäßen Implantate gewährleisten ferner eine gute Durchblutung verbunden mit der besseren Abstützung der Implantatbasis. Gerade im Bereich der Kieferhöhlenwand können die erfindungsgemäßen Implantate sehr gut eingesetzt werden, weil nur eine Scheibe durch die Kieferhöhle geschoben werden muss und sich im eher schwächer ausgebildeten Knochen der vestibulären Kieferhöhlenwand die Kaukräfte zwischen der Basisscheibe und der Teilscheibe besser verteilen, wobei nach wie vor der Hauptanteil der auftretenden Kaukräfte von der Basisscheibe des Implantates aufgenommen und auf den Kieferknochen übertragen werden.

Über die Zahl der Verbindungspunkte zwischen der Basisscheibe des Implantates und der oder den Teilscheiben kann die Elastizität der Konstruktion beeinflusst und eingestellt werden. Je mehr Schenkelverbindungen vorliegen, umso starrer sind Teilscheibe und Basisscheibe miteinander verbunden. In der Praxis erweisen sich ein oder zwei Verbindungen als zweckmäßig. Bei noch höherer Anzahl an Verbindungspunkten wird die Blutversorgung in nachteiliger Weise noch stärker unterbrochen.

Nach einem weiteren Merkmal der Erfindung weist die Teilscheibe einen weit größeren Durchmesser auf, als die Basisscheibe des Implantates. So können im basaleren Kieferknochen die Mastikationskräfte besser auf weiter entfernt liegende Knochenareale übertragen werden. Gerade im Oberkiefer weisen die Knochenareale, die im Bereich des Alveolarfortsatzes liegen, eher schlechtere Knocheneigenschaften (geringere Mineralisation, geringere biomechanische Beanspruchung) auf als echte basale, zum Schädelskelett gehörende Knochenanteile.

Durch Aussparungen, die von den Seiten her in den Steg des U-förmig ausgebogenen Endabschnittes der Basisscheibe eingefräst sind, kann die Breite eines Mittelsteges bestimmt und eingestellt werden, der vom Osteotomieschlitz aufzunehmen ist. Die Breitenabmessung des Mittelsteges wird hierbei so gewählt, dass sie etwas kleiner als der gefräste Osteotomieschlitz ist. Diese Maßnahme ermöglicht eine erleichterte Anpassung bei der exakten Positionierung der Implantatbasis.

Das erfindungsgemäße Dentalimplantat wird wiederum aus Titan, einer Titanlegierung oder aus einer Titan-Molybdän-Legierung, insbesondere aus Ti 15, Mo oder Ti30Mo, hergestellt. Aber auch weichere Titansorten, wie z.B. Reintitan Grade 1, können bei größer gewählten Querschnitten der Implantatkonstruktion zur Anwendung kommen. Dieses Material ermöglicht ein leichteres Adaptieren des Implantates an die anatomischen Vorgaben des Knochens, während dies bei relativ starren Implantatmaterialen, namentlich bei den vorgenannten Titanlegierungen eher nicht durchführbar ist.

Mehrteilige Ausführung von Implantat und Teilscheibe ist auch deswegen besonders vorteilhaft, weil dadurch die Lagerhaltung für den Implantologen erleichtert wird. So können Implantate mit montierten Gewindeträgern separat bevorratet werden, während Teilscheiben mit einem unterschiedlichen Abstand zur Basisscheibe und mit unterschiedlichen Breitenabmessungen und Durchmessern separat vorliegen können.

Liegen auch Gewindeträger und Basisscheibe separat vor, - beispielsweise verbunden durch ein Gewinde-, wird die Lagerhaltung nochmals vereinfacht.

Auch der Austausch einzelner Teilscheiben im Falle der fehlenden Osseointegration ist bei konstruktiver Trennung von Basisscheibe und Teilscheibe leichter möglich, weil das inserierte Dentalimplantat belassen werden kann. Auch Implantate durch späteres Hinzufügen von zusätzlichen Teilscheiben im Falle des teilweisen Versagens der Osseointegration der Basisscheibe gerettet werden, indem sekundär eine Stabilisierung der Basisscheibe, gegebenenfalls kombiniert mit einer augmentativen Massnahme (Knochenaufbau) vorgenommen wird.

Wenn im Oberkiefer die Osseointegration versagt, dann tritt dies zunächst vestibulär auf, während medial oft noch ein guter Implantat-Knochenverbund vorliegt: In diesem Fall gelingt es noch häufig, durch Ein- oder Anbringung zusätzlicher Teilscheiben das mobile Implantat zu stabilisieren, zumal durch die einbringungsbedingte Blutung und die Entfernung von etwaigen Granulationen die Heilung des Knochens ermöglicht wird

Da die Osteotomie für die zusätzliche Teilscheibe in vorteilhafter Weise mit dem gleichen Cutter vorgenommen wird wie für die Basisscheibe, entsteht eine halbkreisförmige Knochenausnehmung. Zur vollen Ausnutzung dieses Knochenschnitts ist es vorteilhaft, die Konfiguration der Teilscheiben ebenfalls halbkreisförmig auszubilden.

Zum Erreichen einer guten Osseointegration reicht es aus, nur die Teilscheiben mit einer Oberflächenvergrößerung zu versehen. Andererseits kann auch die gesamte Zusatzkonstruktion, bestehend aus der oder den Teilscheiben, dem Mittelsteg oder den Verbindungsschenkeln und den Elementen der Formschlussverbindung, aufgeraut sein. Die Oberflächenvergrößerung kann z.B. durch Ätzen, Strahlen oder durch eine Kombination dieser Techniken vorgenommen werden.

Liegt viel vertikaler Knochen im vestibulären Kieferanteil vor, so können auch mehrere miteinander verbundene Teilscheibe mit der Basisscheibe verbunden werden.

Die mehrteilige Ausführung von Dentalimplantat und Teilscheibe erlaubt es auch, bei nicht mittiger Positionierung in Bezug auf die Basisscheibe, auch weiter entfernt liegende Knochenareale zur Kraftübertragung heranzuziehen. Dies besonders auch dann, wenn die Teilscheibe selber nicht symmetrisch ausgebildet ist und ungleich lange Schenkel aufweist, die die zusätzlichen Kraftübertragungs- und Abstützflächen bilden.

Die Erfindung soll nachstehend an einem Ausführungsbeispiel näher erläutert werden. In der dazugehörigen Zeichnung zeigen:
- Fig. 1: eine schematische Darstellung des erfindungsgemäßen Dentalimplantates in einteiliger Ausführung
- Fig. 2: die Ansicht aus Richtung A gemäß Fig.1,
- Fig. 3: die Ansicht aus Richtung B gemäß Fig1.
- Fig. 4: die zweiteilige Ausführung eines Dentalimplantates nach der Erfindung,
- Fig. 5: die Draufsicht von Fig. 4,
- Fig. 6: die Ansicht aus Richtung C der Fig. 4,
- Fig. 7: die rechte Seitenansicht von Fig. 4,
- Fig.8: eine Verbindung von Teilscheibe und Basisscheibe des Dentalimplantates durch zwei, mit Rastköpfen ausgestattete Schenkel,
- Fig. 9: die Draufsicht auf die Teilscheibe nach Fig. 4,
- Fig. 10: die Draufsicht auf ein Dentalimplantat mit einer gegenüber der Basisscheibe vergrößerten Teilscheibe,
- Fig. 11: die rechte Seitenansicht von Fig. 11,
- Fig. 12: ein Dentalimplantat nach der Erfindung, an dessen Basisscheibe eine annähernd halbrunde Teilscheibe angeschlossen ist,
- Fig. 13: die rechte Seitenansicht von Fig. 12,
- Fig. 14: die Draufsicht auf die Teilscheibe nach Fig. 12,
- Fig. 15: eine weitere, vorteilhafte Anordnung von Dentalimplantat und Teilscheibe.

Das erfindungsgemäß einstückig ausgebildete Dentalimplantat 1 besitzt einen Gewindeträger 3, der kopfseitig mit einem Anschlussgewinde 2 zur Aufnahme und Befestigung prothetischer Teile versehen und mit einer Basisscheibe 4 fest verbunden ist.

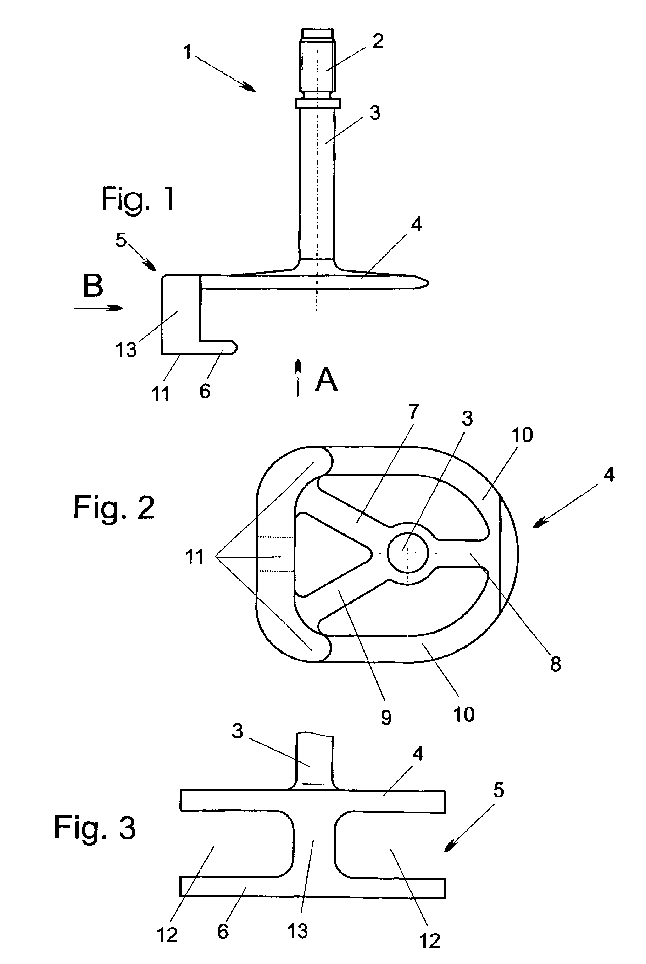

Um die Abstützfläche des Dentalimplantates 1 zu vergrößern und eine noch bessere Verankerung des inserierten Implantates 1 im Kieferknochen mit einer zusätzlichen Teilscheibe zur Basisscheibe zu erreichen, ist der Endabschnitt 5 der Basisscheibe 4 U-förmig ausgebogen, wobei der freie U-Schenkel 6 in Einschubrichtung der Implantatbasis 1 in einen Osteotomischlitz, der durch einen chirurgischen Eingriff in den Kieferknochen eingefräst worden ist, liegt. Der mittlere Teil des U-Schenkels 6 ist so ausgeformt, dass eine zusätzliche Abstützfläche 11 entsteht, die in etwa der Breite des Ringkörpers 10 der Basisscheibe 4 entspricht. Der Ringkörper 10 ist über Stege 7; 8, 9 fest mit Gewindeträger 3 verbunden. Die Stege 7, 8; 9 sind vorteilhafter Weise in Einschubrichtung angeordnet und dadurch in der Lage, die beim Einsetzen des Dentalimplantates in den Osteotomieschlitz auftretenden Kräfte besser aufzunehmen und zu übertragen, ohne dass Deformierungen und Verwindungen an den Stegen 7, 8; 9 und am Ringkörper10 eintreten können - Fig. 1 und 2.

Wie insbesondere aus Fig. 3 hervorgeht, sind im Steg der U-Form zwei Aussparungen 12 von der Seite her eingebracht, die einen Mittelsteg 13 begrenzen. Dieser Mittelsteg 13 wird vom Osteotomieschlitz aufgenommen. Seine Breitenabmessung ist vorteilhafter Weise etwas kleiner gewählt als die Breite des Osteotomieschlitzes, um eine leichtere Anpassung bei der Positionierung der inserierten Implantatbasis vornehmen zu können.

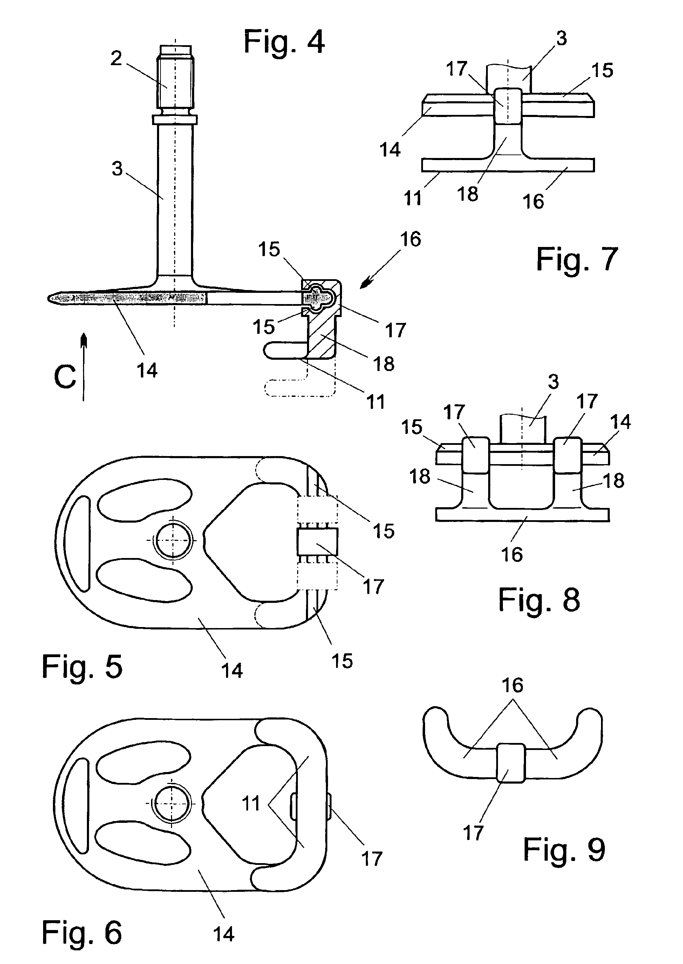

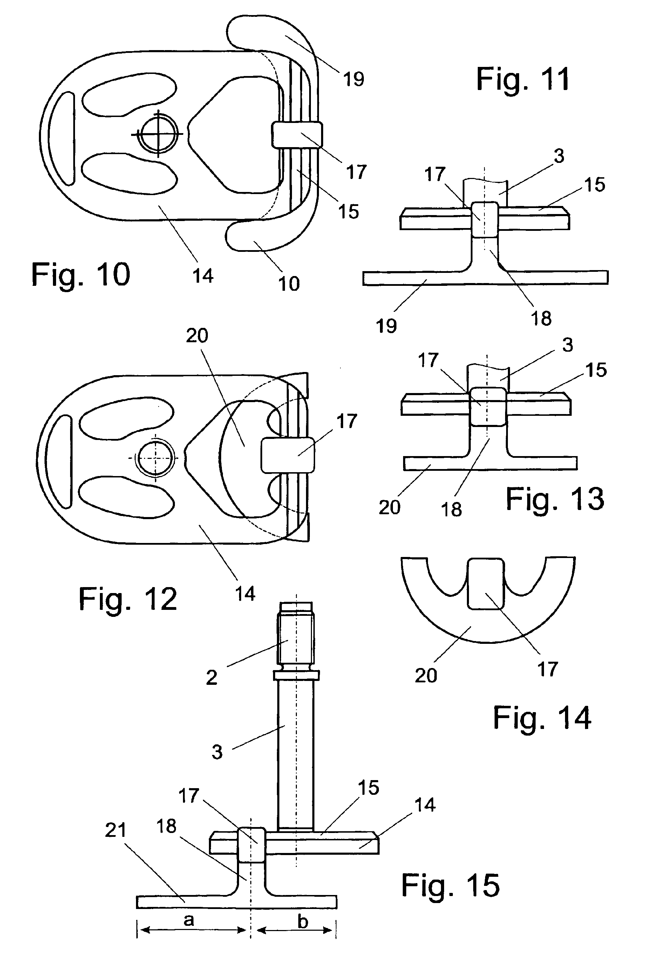

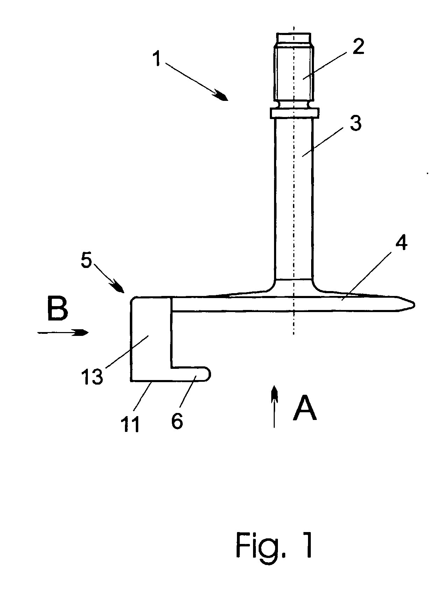

In den Fig. 4 bis 7 ist eine bevorzugte Ausführungsform des erfindungsgemäßen Dentalimplantates dargestellt, bei der das Implantat 1 und die Teilscheibe 16 zur zusätzlichen Vergrößerung der Kraftübertragungs- und Abstützfläche zweiteilig und als separate Bauteile ausgebildet sind, wobei die Teilscheibe 18, wie aus den Fig. 10 bis 14 hervorgeht, hinsichtlich der anatomischen Vorgaben des Kieferknochens und der dentalen Bedingungen für die Insertion des Implantates individuell ausgestaltet sein kann.

Das Dentalimplantat 1 und die Teilscheibe 18 sind durch eine Formschlussverbindung miteinander verbunden. Hierfür sind auf dem Ringkörper 10 der Basisscheibe 14 Rastelemente 15 vorgesehen, die von einem Rastkopf 17 clipartig übergriffen werden. Der Rastkopf 17 ist am freien Ende eines Schenkels 18 angeordnet, über den die Teilscheibe 16 mit den zusätzlichen Kraftübertragungs- und Abstützflächen 11 in einem vorbestimmten, horizontalen Abstand zur Basisscheibe 14 am Ringkörper 10 der Basisscheibe 14 befestigt wird. Die Teilscheibe 16 ist so ausgeformt, dass die zusätzlichen Kraftübertragungs- und Abstützflächen 11 in etwa den Abmessungen der Basisscheibe 14 und des Ringkörpers 10 entsprechen.

Wie in Fig. 4 an Hand der strichpunktierten Linien dargestellt, kann die Teilscheibe 16 auch mehrere Scheibenteile besitzen, die mit Abstand zueinander durch einen gemeinsamen Schenkel 18 miteinander verbunden sind. Mit einer solchen Ausbildung der Teilscheibe 16 kann die Anpassung des Dentalimplantates 1 an den Kieferknochen erweitert und in die verfügbare zusätzliche Kraftübertragungs- und Abstützflächen 11 weiter erhöht werden.

Fig. 8 zeigt eine Anordnung, bei der die Teilscheibe 16 durch mehrere Schenkel 18 an der Basisscheibe 14 formschlüssig befestigt ist. Durch diese Ausbildung und Anordnung kann die Elastizität der Konstruktion für ein Dentalimplantat 1 mit einer Teilscheibe 16 bzw. mit Teilscheiben 19 bis 20 beeinflusst und eingestellt werden.

Bei der in Fig. 10 gezeigten Ausführungsform ist die Teilscheibe 19 in ihren äußeren Abmessungen größer gewählt als die Basisscheibe 14 des Dentalimplantates 1. Diese Maßnahme dient ebenfalls der Erhöhung der Adaptionsmöglichkeiten des Implantates entsprechend den anatomischen Vorgaben des Kieferknochens. In ihrer konstruktiven Gestaltung entspricht diese Ausführungsform der Ausführung nach Fig. 4.

Gemäß Fig. 12 entspricht die äußere Kontur der Teilscheibe 20 der Form des Fräswerkzeuges, mit dem der Osteotomieschlitz zur Aufnahme der Teilscheibe 20 im Kieferknochen hergestellt wird. Die Teilscheibe 20, die wiederum über einen Schenkel 18 und den Rastkopf 17 mit der Basisscheibe 14 verbunden wird, ist mit Aussparungen 22 versehen, durch die das Einwachsen der Teilscheibe 20 in den Kieferknochen unterstützt und die Durchblutung gefördert wird.

Die erfindungsgemäße Lösung ermöglicht auch eine asymmetrische Anordnung von Dentalimplantat 1 und Teilscheibe 21, die ihrerseits ebenfalls asymmetrisch ausgebildet ist und zwei, in Bezug zum Schenkel 18 unterschiedlich lange Schenkel a und b, deren untere Seite die zusätzlichen Kraftübertragungs- und Abstützflächen 11 bilden, besitzt. Die Lösung ist insbesondere dann von Vorteil, wenn Knochenareale zur Kraftübertragung einbezogen werden sollen, die von der Insertionsstelle weiter entfernt liegen.

### BEZUGSZEICHENAUFSTELLUNG

- 1: Dentalimplantat
- 2: Anschlussgewinde
- 3: Gewindeträger
- 4: Basisscheibe
- 5: Endabschnitt
- 6: U-Schenkel
- 7: Steg
- 8: Steg
- 9: Steg
- 10: Ringkörper
- 11: Abstützflächen
- 12: Aussparung
- 13: Mittelsteg
- 14: Basisscheibe
- 15: Rastelement
- 16: Teilscheibe
- 17: Rastkopf
- 18: Schenkel
- 19: Teilscheibe
- 20: Teilscheibe
- 21: Teilscheibe
- 22: Aussparung

## Patentansprüche

1. Dentalimplantat mit eimem die spätere Prothetik aufnehmenden vertikalen Gewindeträger (3), einer Basisscheibe (4;14) mit Ringkörper (10), einem oder mehreren Stegen (7; 8; 9), die den Ringkörper (10) der Basisscheibe (4; 14) mit dem Gewindeträger (3) fest verbinden, **dadurch gekennzeichnet, dass** an der zur Einschubseite des Dentalimplantates (1) gegenüberliegenden Seite der Basisscheibe (4; 14) mindestens eine Teilscheibe (16; 19; 20; 21) angeordnet und in Längsrichtung des Gewindeträgers (3) zur Basisscheibe (4; 14) beabstandet durch mindestens ein Verbindungselement, also Mittelsteg (13) oder Schenkel (18), (13; 18) am Ringkörper (10) der Basisscheibe (4; 14) angebracht ist.

2. Dentalimplantat nach Anspruch 1, **dadurch gekennzeichnet, dass** die mindestens eine Teilscheibe (16; 19; 20; 21) und das Dentalimplantat (1) mit dem Gewindeträger (3), der Basisscheibe (14) und den Stegen (7; 8; 9) zweiteilig ausgebildet sind und separate Baugruppen bilden.

3. Dentalimplantat nach Anspruch 1 und 2, **dadurch gekennzeichnet, dass** die mindestens eine Teilscheibe (16; 19; 20; 21) über einen oder mehrere Schenkel (18) und durch eine Formschlussverbindung an die Basisscheibe (14) angeschlossen ist.

4. Dentalimplantat nach Anspruch 1 bis 3, **dadurch gekennzeichnet, dass** die vestibulären Abschnitte des Ringkörpers (10) der Basisscheibe (14) Rastelemente (15) aufweisen und freie Enden der Schenkel (18) Rastköpfe (17) tragen, die die Rastelemente (15) clipartig übergreifen.

5. Dentalimplantat nach Anspruch 1 bis 4, **dadurch gekennzeichnet, dass** die Teilscheibe (20) eine annähernd halbkreisförmige Außenkontur aufweist und mit Aussparungen (22) versehen ist.

6. Dentalimplantat nach Anspruch 1 bis 4, **dadurch gekennzeichnet, dass** die Teilscheibe (19) größer ist als die Basisscheibe (14) und diese in ihren äußeren Abmessungen überragt.

7. Dentalimplantat nach Anspruch 1 bis 4, **dadurch gekennzeichnet, dass** die Teilscheibe (21) nicht symmetrisch ausgebildet und außermittig zur vertikalen Achse des Dentalimplantates (1) an der Basisscheibe (14) angeschlossen ist.

8. Dentalimplantat nach Anspruch 7, **dadurch gekennzeichnet, dass** zusätzliche Kraftübertragungs- und Abstützflächen (11) der Teilscheibe (21) durch ungleich lange Schenkel (a; b) gebildet werden.

9. Dentalimplantat nach Anspruch 1, **dadurch gekennzeichnet, dass** Teilscheibe und Dentalimplantat (1) einstückig ausgebildet sind, wobei die Teilscheibe durch einen U-förmig ausgebogenen Endabschnitt (5) der Basisscheibe (4) gebildet wird und der freie U-Schenkel (6) in Einschubrichtung des Implantates liegt.

10. Dentalimplantat nach Anspruch 9, **dadurch gekennzeichnet, dass** in den Steg des U-förmig ausgebogenen Endabschnittes (5) zwei Aussparungen (12), die einen Mittelsteg (13) begrenzen, vorhanden sind.

11. Dentalimplantat nach Anspruch 9, **dadurch gekennzeichnet, dass** im freien U-Schenkel (6) Abstützflächen (11) ausgeformt sind, die in etwa der Breite des Ringkörpers (10) der Basisscheibe (4) entsprechen.

12. Dentalimplantat nach Anspruch 1, **dadurch gekennzeichnet, dass** die mindestens eine Teilscheibe (16; 19; 20; 21) und das Dentalimplantat (1) aus Titan, einer Titanlegierung oder aus einer Titan-Molybdän-Legierung, insbesondere Ti 15, Mo oder Ti30Mo oder aus Ti6Al4V oder aus Ti6Al7Nb hergestellt sind.

13. Dentalimplantat nach einem der Ansprüche 1 bis 12, **dadurch gekennzeichnet, dass** der Gewindeträger (1) mit einer oder mehreren Basisscheiben (4; 14) reversibel verbunden ist.

## Claims

1. Dental implant with a vertical thread-carrier (3) for receiving a subsequent prosthodontics, a base disc (4; 14) with annular body (10), one or a plurality of bars (7; 8; 9) which firmly connect the annular body (10) of the base disc (4; 14) with the thread-carrier (3), **characterised in that** at the side of the base disc (4; 14) which is on opposite side of the insertion side of the dental implant (1), at least one indexing disc (16; 19; 20; 21) is arranged and disposed in longitidunal direction of the thread-carrier (3) to the base disc (4; 14) by at least one connecting element (13; 18), namely a middle bar (13) or a leg (18), and attached to the annular body (10) of the base disc (4; 14).

2. Dental implant according to claim 1, **characterised in that** the at least one indexing disc (16; 19; 20; 21) and the dental implant (1) with the thread-carrier (3), the base disc (14) and the bars (7; 8; 9) are formed two-parts and constitute separate groups of components.

3. Dental implant according to claim 1 and 2, **characterised in that** the at least one indexing disc (16; 19; 20; 21) is connected to the base disc (14) by one or a plurality of legs (18) and by a form-fitting connection.

4. Dental implant according to claims 1 to 3, **characterised in that** the vestibular sections of the annular body (10) of the base disc (14) comprise latching elements (15) and free ends of legs (18) comprise latching heads (17) which gear into the latching elements (15) in a clip-like manner.

5. Dental implant according to claims 1 to 4, **characterised in that** the indexing disc (20) comprises an approximately semicircular outer contour and is furnished with notches (22).

6. Dental implant according to claims 1 to 4, **characterised in that** the indexing disc (19) exceeds the base disc (14) and overhangs its outer dimensions.

7. Dental implant according to claims 1 to 4, **characterised in that** the indexing disc (21) is not designed symmetrically and is connected excentrically to the vertical axis of the dental implant (1) at the base disc (14).

8. Dental implant according to claim 7, **characterised in that** additional power transmitting and supporting areas (11) of the indexing disc (21) are formed by uneven lengths of the legs (a; b).

9. Dental implant according to claim 1, **characterised in that** indexing disc and dental implant (1) are formed by one-piece, whereby the indexing disc is constituted by a U-shape bended end section (5) of the base disc (4) and the free U-leg (6) is positioned in the insertion direction.

10. Dental implant according to claim 9, **characterised in that** there are two notches (12) in the bar of the U-shaped end section (5) which limit a middle bar (13).

11. Dental implant according to claim 9, **characterised in that** in the free U-leg (6) supporting areas (11) are formed which equate to approximately half the width of the annular body (10) of the base disc (4).

12. Dental implant according to claim 1, **characterised in that** the at least one indexing disc (16; 19; 20; 21) and the dental implant (1) are made of titanium, a titanium alloy, or a titanium-molybdenum alloy, particularly Ti15Mo, or Ti30Mo or Ti6Al4V or Ti6Al7Nb.

13. Dental implant according to any of claims 1 to 12, **characterised in that** the thread-carrier (1) is reversibly connected with one or more base discs (4; 14).

## Revendications

1. Implant dentaire muni d'un support fileté (3) vertical logeant le futur appareillage dentaire, d'une ou plusieurs branches (7;8;9) reliant solidairement le corps annulaire (10) de la rondelle de base (4; 14) au support fileté (3), **caractérisé en ce qu'**au moins une demi-rondelle (16;19;20;21) est disposée sur la face de la rondelle de base (4;14) opposée à la face d'insertion de l'implant dentaire (1) et est placée sur le corps annulaire (10) de la rondelle de base (4;14) dans le sens longitudinal du support fileté (3) par rapport à la rondelle de base (4;14) en étant écartée par au moins un élément de connexion (13;18), à savoir la branche médiane (13) ou l'ailette (18).

2. Implant dentaire selon la revendication 1, **caractérisé en ce qu'**au moins l'une des demi-rondelles (16;19;20;21) et l'implant dentaire (1) avec le support fileté (3), la rondelle de base (14) et les branches (7;8;9) sont configurés en deux éléments et forment des groupes de composants séparés.

3. Implant dentaire selon la revendication 1 et 2, **caractérisé en ce qu'**au moins l'une des demi-rondelles (16;19;20;21) est raccordée à la rondelle de base (14) par l'intermédiaire d'une ou plusieurs ailettes (18) et par complémentarité de forme.

4. Implant dentaire selon la revendication 1 à 3, **caractérisé en ce que** les sections vestibulaires du corps annulaire (10) de la rondelle de base (14) présentent des éléments d'encliquetage (15) et des extrémités libres des ailettes (18) portent des têtes d'encliquetage (17) mordant à l'intérieur des éléments d'encliquetage (15) à la manière de clips.

5. Implant dentaire selon la revendication 1 à 4, **caractérisé en ce que** la demi-rondelle (20) présente des contours extérieurs approximativement hémisphériques et est pourvue d'évidements (22).

6. Implant dentaire selon la revendication 1 à 4, **caractérisé en ce que** la demi-rondelle (19) est de taille supérieure à la rondelle de base (14) et dépasse de celle-ci de par ses dimensions extérieures.

7. Implant dentaire selon la revendication 1 à 4, **caractérisé en ce que** la demi-rondelle (21) n'est pas configurée symétriquement et est raccordée à la rondelle de base (14) de manière excentrique par rapport à l'axe vertical de l'implant dentaire (1).

8. Implant dentaire selon la revendication 7, **caractérisé en ce que** des surfaces supplémentaires d'appui et de transmission des forces (11) de la demi-rondelle (21) sont formées par des ailettes (a;b) de longueur inégale.

9. Implant dentaire selon la revendication 1, **caractérisé en ce que** la demi-rondelle et l'implant dentaire (1) sont configurés en un seul élément, la demi-rondelle étant formée par une section terminale (5) de la rondelle de base (4) recourbée en U et l'ailette libre en U (6) se trouvant dans le sens d'insertion de l'implant.

10. Implant dentaire selon la revendication 9, **caractérisé en ce que** deux évidements (12) délimitant une branche médiane (13) sont présents dans la branche de la section terminale (5) recourbée en U.

11. Implant dentaire selon la revendication 9, **caractérisé en ce que** des surfaces d'appui (11) correspondant approximativement à la largeur du corps annulaire (10) de la rondelle de base (4) sont formées dans l'ailette libre en forme de U (6)

12. Implant dentaire selon la revendication 1, **caractérisé en ce qu'**au moins une demi-rondelle (16;19;20;21) et l'implant dentaire (1) sont fabriqués en titane, un alliage de titane ou un alliage de titane/molybdène, notamment Ti15Mo ou Ti30Mo, ou en Ti6A14V ou en Ti6Al7Nb.

13. Implant dentaire selon l'une quelconque des revendications 1 à 12, **caractérisé en ce que** le support fileté (1) est raccordé de manière réversible à une ou plusieurs rondelles de base (4;14).
